Europäisches Patentamt

(19) European Patent Office

Office européen des brevets

(11) Publication number: **0 032 312 B1**

# (12) EUROPEAN PATENT SPECIFICATION

(45) Date of publication of patent specification: **18.03.87**

(51) Int. Cl.⁴: **G 05 B 19/39**

(21) Application number: **80304695.2**

(22) Date of filing: **23.12.80**

(54) **Control system for stopping spindle at predetermined rotational position.**

(30) Priority: **31.12.79 JP 172680/79**

(43) Date of publication of application:
**22.07.81 Bulletin 81/29**

(45) Publication of the grant of the patent:
**18.03.87 Bulletin 87/12**

(84) Designated Contracting States:
**DE FR GB**

(56) References cited:
**EP-A-0 012 619**
**FR-A-2 147 009**
**FR-A-2 213 713**
**FR-A-2 402 514**
**GB-A-1 027 607**
**GB-A-1 062 246**
**GB-A-1 154 141**
**US-A-3 824 891**
**US-A-4 663 880**

(73) Proprietor: **FANUC LTD**
**3580, Shibokusa Aza-Komanba Oshino-mura**
**Minamitsuru-gun Yamanashi 401-05 (JP)**

(72) Inventor: **Kohzai, Yoshinori**
**16-3, Hirayama, 2-chome, Hino-shi**
**Tokyo (JP)**
Inventor: **Fujioka, Yoshiki**
**Hino-shataku 102, 27, Tamadaira, 3-chome,**
**Hino-shi**
**Tokyo (JP)**
Inventor: **Ota, Naoto**
**Dai-ichi Sakaeso 101, 38-9, Toyoda, 3-chome**
**Hino-shi Tokyo (JP)**

(74) Representative: **Billington, Lawrence Emlyn**
**et al**
**HASELTINE LAKE & CO. Hazlitt House**
**28 Southampton Buildings Chancery Lane**
**London WC2A 1AT (GB)**

## Description

This invention relates to a system for stopping a spindle at a predetermined rotational position.

Machine tools with an automatic tool changing function are well known in the art. These are machine tools that perform maching work automatically while various tools are changed, also automatically. The tools carried on such machines are changed in the following manner. First, a magazine holding a number of tools is revolved to bring a vacant tool holding portion of the magazine into position directly above a spindle mechanism. The spindle mechanism, which is grasping an old tool to be exchanged for a new one, is then projected forwardly, after which the magazine positioned above the spindle mechanism is lowered to permit the old tool to be received and grasped by the vacant tool holding portion of the magazine. The spindle mechanism is then retracted so that the old tool separates from the spindle, thereby transferring the old tool to the magazine. Next, the magazine is revolved to bring the desired new tool into position in front of the spindle, and the spindle mechanism is projected forwardly to allow the spindle to receive and to grasp the new tool. Finally the magazine is raised away from the spindle to complete the tool change operation.

It is required in the tool change mechanism of the foregoing type that a prescribed part of the spindle, such as a key member, be stopped accurately at the correct rotational position in order to permit the fitting portions of the spindle and tool to mate with each other smoothly. More specifically, a key is mounted on the spindle and a keyway is formed in the tool in order to mate with the key. The smooth mating of the spindle and tool requires that the spindle be positioned and stopped to provide the correct alignment of key and keyway. Meeting the above requirement necessitates a high spindle positioning accuracy of from ±0.1 to ±0.2 degrees in terms of the angle of rotation of the spindle.

The conventional automatic tool change mechanisms are provided with a photoelectric detector or with a limit switch mechanism which detects the rotational position of the spindle key in order to facilitate the smooth mating of the spindle and tool. The arrangement is such that the spindle is brought to a stop at the prescribed position by the application of a mechanical brake which is actuated in response to a signal from the key position detecting means.

The foregoing apparatus not only fails to provide the desired positioning accuracy but has a stopping mechanism that experiences wear with long use since the mechanism relies upon mechanical pin or brake means or the like. Such wear, particularly of a brake shoe or pin, makes it progressively more difficult to stop the spindle at the prescribed position, and the result is that the automatic changing of tools cannot proceed smoothly.

Accordingly, there is a need for a control system which is capable of stopping a spindle at a predetermined rotational position with a high degree of accuracy by purely electrical means, without relying upon a mechanical pin or mechanical brake mechanism to stop the spindle in performing an automatic tool change operation.

On the other hand, numerically controlled machine tools are being applied increasingly to the boring of such workpieces as automobile engine boxes. Such boring work requires the use of thicker boring bars or cutters in view of preventing chatter by increasing rigidity. There are cases, however, where the use of thicker diametered boring bars cannot be employed, as in the case of boring a hole whose dimensions are such that the thicker boring bars cannot be inserted. This point will be elaborated on in the following description of a boring machine tool.

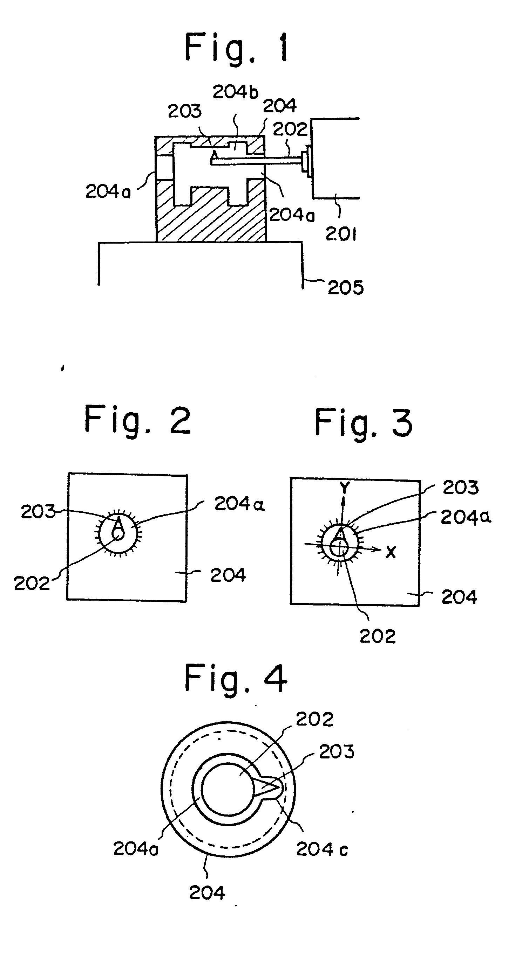

Figure 1 is an illustrative view of a boring machine tool in simplified form. Provided are a headstock 201, a boring bar 202, and a cutting tool 203. A workpiece 204, which is carried on a table 205, includes holes 204a, 204a' for receiving the boring bar 202, and a hollow portion 204b. In the boring machine tool of this type, the cutting tool 203 is inserted into the hollow portion 204b of the workpiece 204 through either the insertion hole 204a or 204a', after which the workpiece is moved relative to the cutting tool to permit the cutting tool to bore the workpiece in a prescribed manner. The holes 204a, 204a', since they are eventually to be covered, are comparatively small in diameter. It is therefore necessary to select a boring bar 202 of a small diameter, as shown in Figure 2, in order to prevent the cutting tool 203 from contacting the periphery of the hole 204a when the boring bar is inserted into and withdrawn from the interior of the workpiece. The small diameter boring bar experiences chatter during machining so that a high degree of accuracy cannot be achieved.

Proposed methods of solving the above problem are shown in Figures 3 and 4, wherein arrangements are adopted that permit the utilization of a boring bar 202 of a larger diameter. In accordance with the method of Figure 3, the center of the boring bar 202 is offset from the center of the hole 204a along the Y-axis when the boring bar is inserted and withdrawn, the cutting tool 203 being positioned so as to coincide with the Y-axis. It should be noted, however, that the choice of the X-axis here is illustrative only. In accordance with the method of Figure 4, a cutting tool insertion notch 204c is formed in the workpiece 204 so as to communicate with the insertion hole 204a, and the cutting tool 203 is so positioned as to coincide with the notch 204c when the boring bar is inserted and withdrawn. Both methods depicted in Figures 3 and 4 reduce vibration by allowing the use of a boring bar of a larger diameter. When the cutting tool is inserted into the workpiece and when its rotation is stopped after a machining operation, both of the above methods require that the spindle of the machine tool be stopped accurately at a predetermined rotational position which is the positive Y-axis in the arrangement of Figure 3 and the position of the cutting tool insertion slot 204c in the arrangement of Figure 4. In other words, in order to eliminate chatter and effect a rigid machining operation by employing a boring bar of a larger diameter, a control system is required through which the spindle mounting the boring bar can be stopped at a predetermined rotational position.

To this end, the present inventors have already proposed a system for stopping a spindle at a predetermined rotational position through purely electrical means.

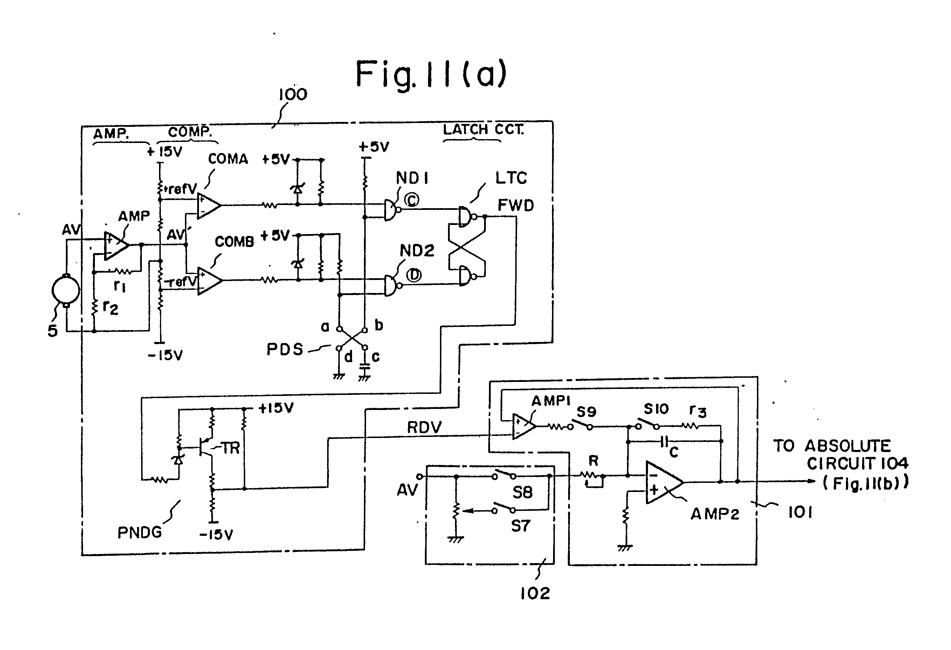

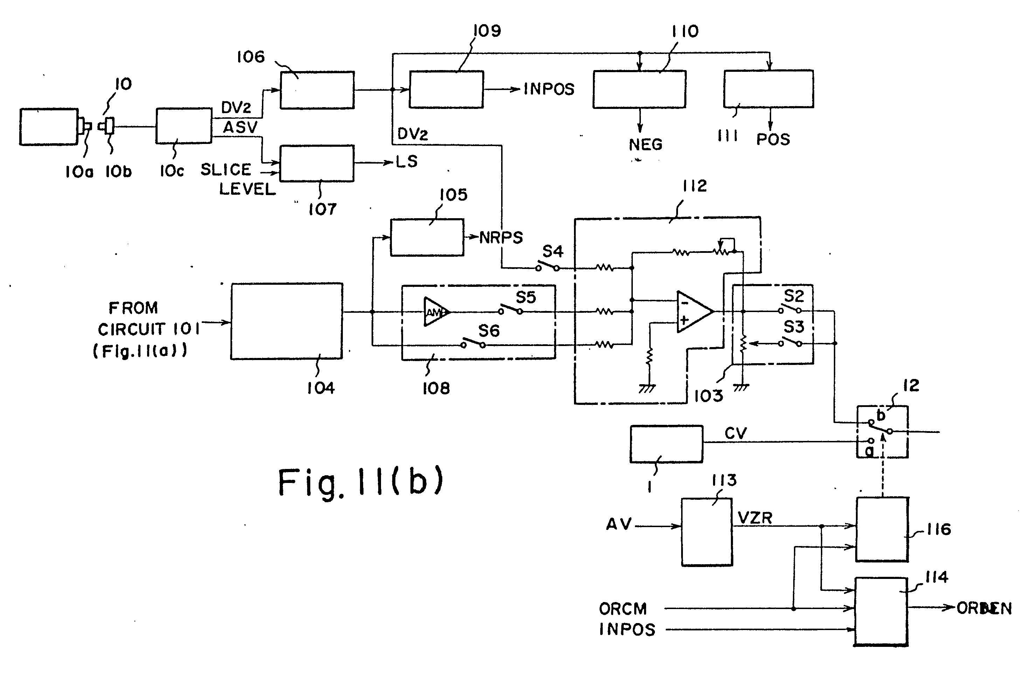

This system is disclosed in EP—A2—0 028 079 which is relevant to the present application under Article 54(3) EPC. Indeed the disclosure of that application is substantially identical to that of the present application except for the item 100 of attached Figure 11(a) which embodies the characterising features of the present invention.

With the previously proposed system, however, a changeover switch is switched over to either a +ve or a −ve voltage in accordance with the direction of spindle rotation, and for any particular one of the two switch positions, it is required that the spindle be rotating in a certain direction, such as the forward direction, in order to stop the spindle at the predetermined rotational position. It is not possible to stop the spindle at said position when it is rotating in the other direction, namely the reverse direction, when the changeover switch is still in said one position. Accordingly, when the spindle is rotating in the reverse direction, it is necessary to bring the spindle to a halt and then rotate it in the forward direction to stop it at the predetermined rotational position if the changeover switch is still in said one position.

This procedure is annoying and may give the operator a sense of unease. More importantly, in a boring machine where boring is taking place by rotating the spindle in the reverse direction in the above circumstances, a problem is encountered since the cutting tool must be rotated in a direction opposite to that of the machining direction, namely in the forward direction, at the conclusion of the boring work in order to properly orient the cutting tool so that it may be withdrawn from the hole in the workpiece. The problem is that the cutting edge of the tool may contact the workpiece in a direction opposite to that of the cutting direction and produce a flaw such as a kerf in the side wall of the bore. Since the flaw lowers the value of the article it is necessary to remove the flaw by a costly and time consuming grinding process.

Still another drawback is the considerable time required to finally stop the spindle at a predetermined rotational position. This is because the spindle, which is rotating in the reverse direction in the above example, must first be halted, rotated again in the opposite (forward) direction, and then brought to a stop at the predetermined position. Since this troublesome operation must be repeated for changing tools and for inserting and withdrawing the boring bar, considerable machining time is lost so that the overall machining efficiency declines.

According to the present invention there is provided a control system for stopping a spindle at a predetermined rotational position, by driving the spindle in such a manner that a positional deviation between the present rotational position of a specified point on the spindle and a predetermined rotational position at which the specified point is to be stopped is reduced to zero, thereby to stop the specified point on the spindle at the predetermined rotational position, the control system comprising:

DC voltage generating means for generating a DC voltage having a first level or a second level depending upon a preset direction of spindle rotation;

means for generating a coarse rotational position deviation signal with a polarity dependent upon the first or second level DC voltage from said DC voltage generating means;

a sensor for producing an output signal of zero volts when the specified point on the spindle arrives at the predetermined rotational position, and for producing a first or second output signal when the specified point on the spindle is in the vicinity of the predetermined rotational position to the left or right thereof, thereby to produce a fine rotational position deviation signal which crosses the zero volt level;

whereby, in use, the coarse rotational position deviation signal from said means for generating the same is delivered as the rotational position deviation signal until the specified point on the spindle reaches the vicinity of the predetermined rotational position, and the fine rotational position deviation signal from said sensor is delivered as the rotational position deviation signal after the specified point on the spindle has reached the vicinity of the predetermined rotational position;

the control system being characterised in that the DC voltage generating means operates in dependence upon a detection means for detecting the direction of spindle rotation, comprising a first comparator for comparing a voltage indicative of the actual spindle speed with a positive reference voltage, and a second comparator for comparing said voltage with a negative reference voltage, the outputs of the comparators indicating the direction of spindle rotation, whereby the coarse rotational position deviation signal can have a polarity such that the spindle is capable of being stopped at the predetermined rotational position in its actual direction of rotation regardless of whether it is in the forward or reverse direction.

Embodiments of the present invention may provide control systems for stopping a spindle at a predetermined rotational position regardless of whether the spindle is rotating in the forward or reverse direction.

A preferred embodiment of the present invention may provide a novel control system for stopping a spindle at a predetermined rotational position in a short period of time regardless of whether the spindle is rotating in the forward or reverse direction.

Preferably, there may be provided a novel control system for stopping a spindle at a predetermined rotational position regardless of whether the spindle is rotating in the forward or reverse direction, and which will not flaw a workpiece in a boring operation at such time that the spindle is stopped at said position.

Other features and advantages of a preferred embodiment of the invention will be apparent from the following description taken in conjunction with the accompanying drawings.

Figure 1 is an illustrative view showing a boring machine tool in simplified form;

Figure 2 is an illustrative view showing the positional relationships among a cutting tool, a boring bar and a hole, located in the workpiece, for receiving the cutting tool and boring bar;

Figures 3 and 4 are illustrative views showing methods of inserting a boring bar into a hole located in a workpiece;

Figure 5 is a block diagram which is useful in describing in outline a control apparatus for stopping a spindle at a predetermined rotational position in accordance with the present invention;

Figures 6A and 6B are illustrative views showing the arrangement of a position sensor, and Figure 6C is a waveform diagram of output signals associated therewith;

Figures 7A and 7B are illustrative views showing the internal structure of the position sensor of Figure 6, and Figure 7C is a waveform diagram of output signals associated therewith;

Figure 8 is a circuit diagram of a portion of the position sensor of Figure 6;

Figures 9A through 9D are illustrative views which are useful in describing the operation of the position sensor;

Figures 10A and 10B are waveform diagrams associated with the control system of the present invention;

Figures 11A and 11B are detailed circuit diagrams of principal portions of a rotational position deviation signal generating circuit;

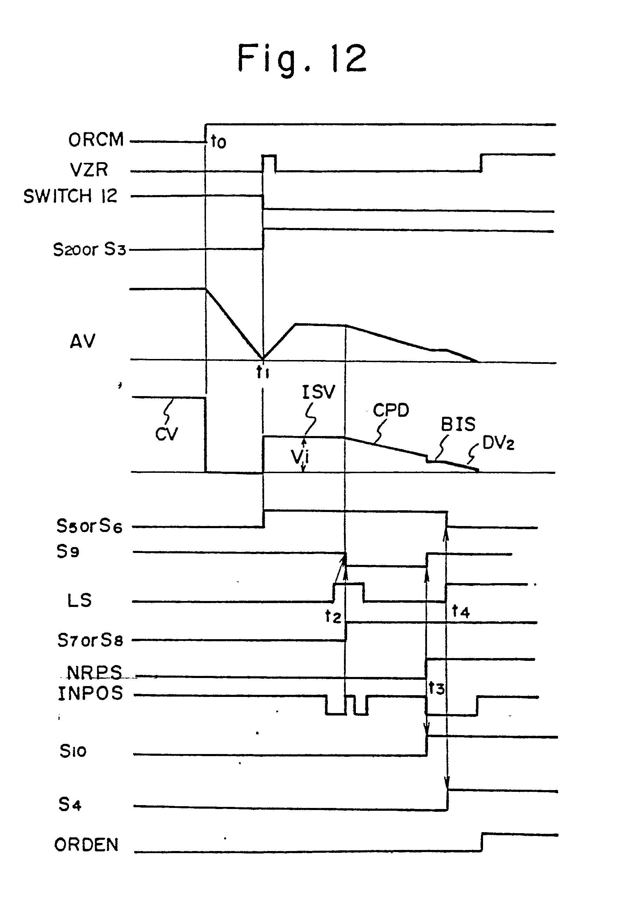

Figure 12 is a waveform diagram of signals associated with the rotational position deviation signal generating circuit of Figure 11; and

Figures 13A and 13B are illustrative views which are useful in describing the operation of a DC voltage generating circuit.

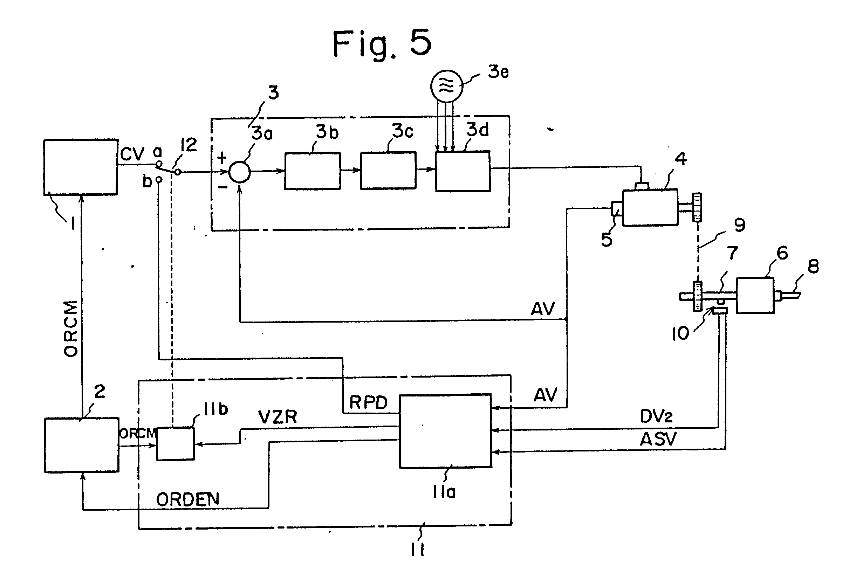

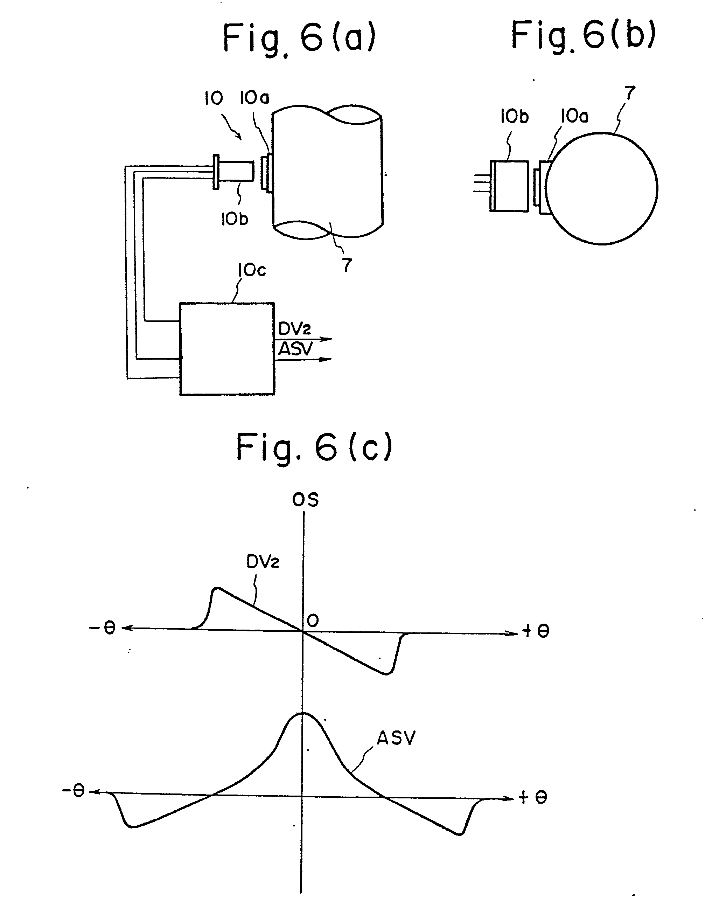

Referring now to Figure 5, there are provided a speed command circuit 1 for producing a speed command CV, and an orientation command circuit 2 for producing an orientation command ORCM. A speed control circuit 3 includes an adder 3a, a phase compensating circuit 3b connected to the output of the adder, a voltage-to-phase converter 3c connected to the output of the phase compensating circuit, and a thyristor converter 3d connected to the output of the converter 3c. The adder 3a is adapted to deliver a difference voltage, representative of a speed deviation, between the voltage of the speed command CV and the voltage of an actual speed signal, during a speed control operation, and to deliver a difference voltage between a rotational position deviation RPD and the actual speed AV. The phase compensating circuit 3b subjects the output voltage of the adder 3a to a phase compensation by advancing or retarding its phase. The voltage-to-phase converter 3c controls the firing angle of each thyristor in the thyristor converter 3d in accordance with the output voltage of the phase compensating circuit 3b. The thyristor converter 3d operates in accordance with the controlled firing angles of its thyristors to convert the three-phase voltage from a three-phase power supply 3e into a direct current to vary the value of the voltage applied to a DC motor which will be described later, thereby to regulate the speed at which the motor rotates. The DC motor is designated at numeral 4 and serves as a spindle drive motor. As the DC motor 4 rotates, a tachometer generator 5 generates a voltage in accordance with the motor speed. The rotational motion of the DC motor 4 is transmitted through a gear mechanism 9 to a spindle 7. The spindle 7 is coupled to a spindle mechanism 6 which mounts a tool 8. It should be noted that the gear mechanism 9 may be replaced by a belt mechanism which employs a timing belt or the like. A rotational position sensor 10 is adapted to detect the rotational position of the spindle 7 and comprises a magnetic body 10a which is attached to the spindle 7, a sensing portion 10b which is attached to a stationary portion of the machine such as the spindle bearing portion so as to confront the magnetic body 10a, and an electrical circuit 10c, as shown in Figures 6A and 6B. The position sensor 10 produces a fine position deviation signal $DV_2$ and an approach signal ASV, shown in Figure 6C, which vary in accordance with the rotational deviation of the spindle 7 with respect to a predetermined rotational position OS at which a specified point on the spindle is to be stopped.

An orientation control circuit 11 includes a rotational position deviation signal generating circuit 11a which receives the fine position deviation signal $DV_2$, the approach signal ASV, and the signal AV, indicative of the actual speed of the spindle, provided by the tachometer 5, and which produces the rotational position deviation signal RPD which serves as a spindle speed command signal when an operation for stopping the spindle at the predetermined rotational position is being carried out, an orientation completion signal ORDEN, and a zero speed signal VZR. The orientation control circuit 11 includes also a loop changeover circuit 11b for actuating a loop changeover switch 12 on the basis of the orientation command signal ORCM from the orientation command circuit 2 and the zero speed signal VZR from the position deviation signal generating circuit 11a.

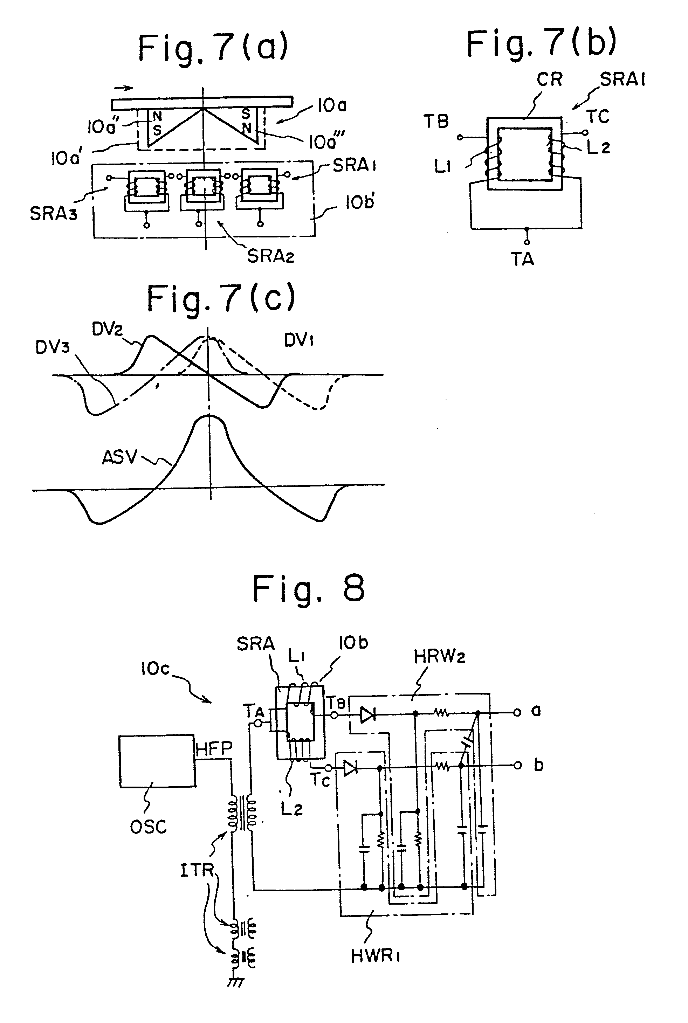

Reference will now be had to Figures 6A and 6B for a fuller understanding of the structure and operation of the position sensor 10, Figure 6A showing a front view and Figure 6B a plan view for a case in which the magnetic body 10a is mounted on the spindle 7. It should be noted that the sizes of the magnetic body 10a and sensing portion 10b are exaggerated in comparison with the spindle 7. The magnetic body 10a is so mounted on the spindle 7 that the center of the magnetic body 10a will coincide with the center of the sensing portion 10b when a specified point on the spindle is located at the predetermined rotational position at which said point is desired to be stopped. As the spindle 7 rotates the electrical circuit 10c produces the fine position deviation signal $DV_2$ and the approach signal ASV having the waveforms shown in Figure 6c. The magnetic body 10a, as shown in Figure 7a, has magnets 10a'', 10a''', possessed of a triangular cross-section, mounted in a case 10a' in such a manner than the intensity of the magnetic field changes from S to N in the direction of spindle rotation, i.e., in the direction of the arrow. The sensing portion 10b is mounted on a mechanically stationary portion of the machine so as to confront the magnetic body 10a, and includes three saturable reactors $SRA_1$, $SRA_2$, $SRA_3$ provided in a case 10b' and aligned in the direction of spindle rotation, as shown in Figure 7a. Each of the saturable reactors comprises coils $L_1$, $L_2$ wound on a core CR, as shown in Figure 7b. The coils $L_1$, $L_2$ on each core have the same number of turns and are wound in opposite directions. The coils on each core share a common terminal TA to which a high-frequency signal is applied, and signals which are in accordance with the rotational position of the magnetic body 10a are obtained from the terminals TB, TC of respective coils.

Included in the electrical circuit 10c is a circuit shown in Figure 8, associated with a corresponding one of the saturable reactors SRA for processing the signal produced by the reactor. Included in the electrical circuit 10c are a pulse oscillator OSC for generating a 100kHz high-frequency signal, an isolating transformer ITR, and half-wave rectifiers $HWR_1$, $HWR_2$. The saturable reactor SRA is excited by the high-frequency pulse signal HFP through the intermediary of the isolating transformer ITR. As a result, an analog output voltage is obtained across the terminals a, b of the circuit, which output voltage is proportional to the external magnetic field $H_{ext}$ whose strength varies in accordance with the rotational position of the magnetic body 10a.

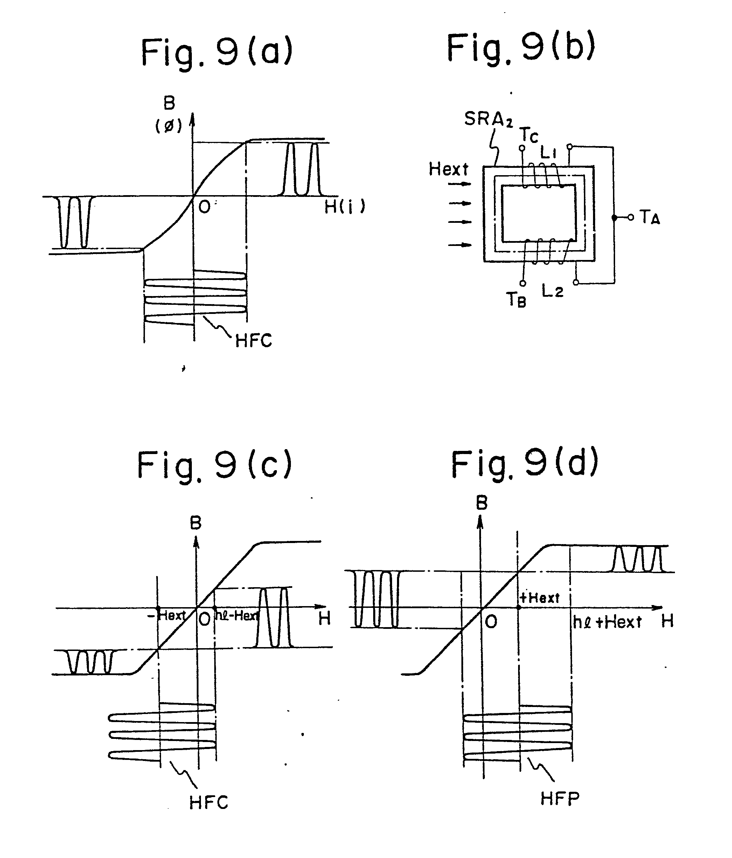

The action of the analog output voltage which is obtained across the terminals a, b and which depends upon the rotational deviation of the spindle 7 will now be described in connection with the reactor $SRA_2$ shown in Figure 7A. When the magnetic body 10a is remote from the saturable reactor $SRA_2$ so that the external magnetic field acting upon the reactor has a value of zero, the high-frequency pulse signal HFP acts about the vertical zero line of the reactor B-H curve as its center, as shown in Figure 9A. In other words, the number of lines of flux cutting the coils $L_1$, $L_2$ are equal, so that the output voltages from the terminals TB, TC are equal in amplitude but displaced in phase by 180 degrees. It should be noted that the core forming the saturable reactor SRA has a hysteresis characteristic which is so small as to be negligible. Since the voltages from the terminals TB, TC are rectified by the respective half-wave rectifiers $HWR_1$, $HWR_2$, the potentials at the terminals a, b are equal, so that the voltage across a, b is zero. Now, as the spindle 7 rotates and the magnetic body 10a approaches the centrally located saturable reactor $SRA_2$, the external magnetic field $H_{ext}$ being generated by the magnetic body begins to act upon the saturable reactor $SRA_2$. If we let $h_1$ denote the field generated by the high-frequency pulse signal HFP, a flux in accordance with $h_1 - H_{ext}$ will cut the coil $L_1$, as shown in Figure 9B, and a flux in accordance with $h_1 + H_{ext}$ will cut the coil $L_2$. If this is expressed by a B-H curve, the high-frequency pulse signal HFP will act about the line $-H_{ext}$ as its center with respect to the coil $L_1$, as shown in Figure 9C, and about the line $+H_{ext}$ with respect to the coil $L_2$, as depicted in Figure 9D. Therefore the negatively directed flux which cuts the coil $L_1$ causes saturation of the core so that there is a smaller amount of variation, whereas the negatively directed flux which crosses the coil $L_2$ does not cause saturation so that there is a greater amount of variation. In view of the fact that the induced voltage $e$ takes on the value $-Nd\phi/dt$ (where N is the number of turns), the potential at the terminal $b$ will become greater than the potential at terminal $a$, giving rise to a potential difference across the terminals. This potential difference will vary in the manner of the fine position deviation signal $DV_2$ of Figure 7C and, as the magnetic body 10a continues to rotate, will become zero when the center of the magnetic body 10a coincides with the center line of the saturable reactor $SRA_2$. The result is an analog voltage signal having maximum and minimum values. Similarly, the saturable reactors $SRA_1$, $SRA_3$ on the left and right sides of the sensing portion 10b, respectively, and the two half-wave rectifiers associated with each reactor, cooperate to produce a potential difference across the terminals a, b of each corresponding circuit. This potential difference also defines an analog voltage signal, similar to that of the fine position deviation signal $DV_2$, having maximum and minimum values. Thus, the analog voltage signals associated with the reactors $SRA_1$, $SRA_3$ also depend upon the rotation of the magnetic body 10a on the spindle 7.

The electrical circuit 10c of the position sensor 10 further includes a conversion circuit for producing a signal $DV_3$, shown in Figure 7C, by subjecting to a 180-degree phase conversion the analog voltage signal which is obtained from the saturable reactor $SRA_3$ and which varies in accordance with the rotational movement of the magnetic body 10a, and a circuit which produces the approach signal ASV, also shown in Figure 7C, by adding together the signal $DV_3$ and the analog voltage signal, denoted by $DV_1$, which is

obtained from the saturable reactor $SRA_1$ and which varies in accordance with the rotational movement of the magnetic body 10a. The approach signal ASV indicates that a specified point on the spindle 7 has reached an area in the environs of the predetermined rotational position.

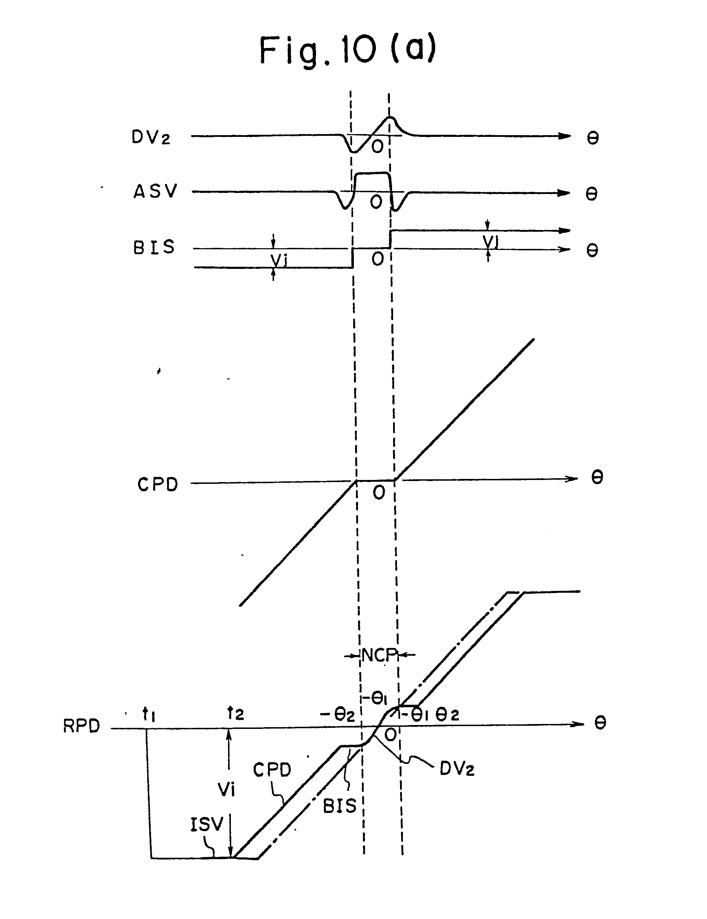

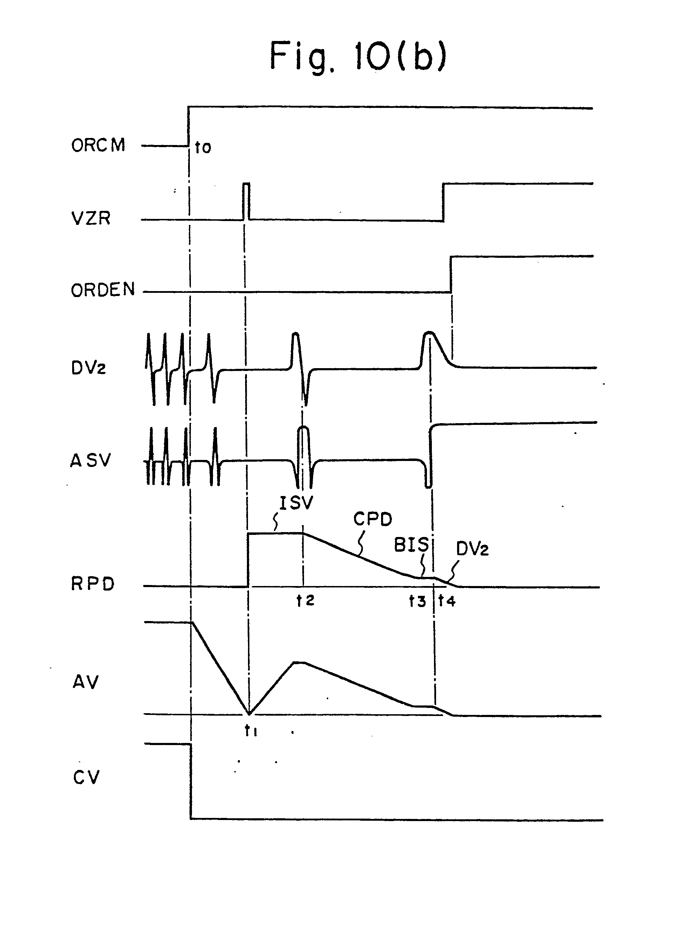

The operation of the rotational position deviation signal generating circuit 11a will now be described with reference to Figures 5 and 10A.

The rotational position deviation signal generating circuit 11a, shown in Figure 5, receives the fine position deviation signal $DV_2$ and the approach signal ASV from the position sensor 10, and the actual speed signal AV from the tachometer 5. The signal AV is integrated within the circuit 11a, and the output signal resulting from the integration operation is subtracted from a yet to be described initially set voltage ISV ($-Vi$ when the spindle is rotating in the forward direction, and $+V_i$ when the spindle is rotating in the reverse direction). Thus the signal AV is converted into a coarse position deviation signal CPD. The voltage value $V_i$ of the voltage ISV has been set so as to be equal to a rotational position deviation voltage which corresponds to one revolution 360°) of the spindle. Further, the rotational position deviation signal generating circuit 11a forms a bias signal BIS, retained within the circuit, having an amplitude which is equivalent to the peak value of the fine rotational position deviation signal $DV_2$.

When the speed command CV falls to zero in accordance with an orientation command signal ORCM from the orientation command circuit 2, the rotational speed of the spindle diminishes and eventually (at time $t_1$) falls to zero (zero speed signal VZR goes to logical "1"). When this occurs, the rotational position deviation signal generating circuit 11a produces the initially set voltage ISV from the time that the zero speed signal VZR goes to logical "1" until the time $t_2$ at which the spindle initially reaches the predetermined rotational position. (Before proceeding further, it will be assumed that the spindle is rotating in the forward direction at the time that it is to be stopped at the predetermined rotational position). Thereafter, as the spindle continues to rotate and the magnetic body 10a (the specified point on the spindle) approaches the predetermined rotational position for the second time, the coarse position deviation signal CPD, whose polarity will be negative, is produced until the magnetic body 10a draws near to the area NCP (defined between $-\theta_1$ and $+\theta_1$) in the environs of the predetermined rotational position, that is, until it arrives at the position $-\theta_2$. Furthermore, the bias signal $BIS-V_j$ is produced until the abovementioned area NCP is reached. The fine position deviation signal $DV_2$ is generated after the magnetic body 10a has reached and entered the area NCP in the environs of the predetermined rotational position. The result of these operations is the rotational position deviation signal RPD, whose polarity will be negative, which is shown in Figure 10a. It should be noted that the bias signal waveform BIS may be excluded from the signal RPD by setting $\theta_2$ equal to $\theta_1$.

If the spindle is to be stopped at the predetermined rotational position while rotating in the reverse direction, $+V_i$ is delivered as the signal ISV, a coarse position deviation signal of a positive polarity as the signal CPD, and $+V_j$ as the signal BIS. The result is the rotational position deviation signal RPD whose polarity will be positive.

The operation of the control circuit for stopping the spindle at a predetermined rotational position will now be described with reference to Figure 10b for a case in which the spindle 7 is rotating in the forward direction. It should be noted that the rotational position deviation signal RPD in Figure 10b is shown in the form of its absolute value.

During rotation of the spindle the changeover switch 12 is connected to the $a$ side in Figure 5, thereby forming a speed control loop. More specifically, the adder 3a receives the speed command signal CV and the average speed signal AV from the tachometer 5, and responds by delivering a rotational speed deviation voltage. The voltage-to-phase converter 3c controls the firing angle of the thyristors in the thyristor converter 3d in accordance with the speed deviation voltage, the thyristor converter 3d thereby regulating the voltage applied to the DC motor 4. As a result, the actual speed of the motor 4 is regulated to bring it into coincidence with the speed command. Therefore the speed control loop regulates the speed of the motor so as to rotate the spindle at approximately the command speed.

When the machining work is completed under these conditions, a control device, such as a numerical control device, instructs the orientation command circuit 2 to apply the orientation command signal ORCM to the loop changeover circuit 11b at the time $t_0$ to place this circuit in the set state. At the same time, the orientation command signal ORCM is applied to the speed command circuit 1, so that the speed command CV drops to a voltage of zero. The actual speed of the spindle consequently decreases and reaches zero at time $t_1$. When this occurs, the zero speed signal VZR is generated within the position deviation signal generating circuit 11a, and causes the loop changeover circuit 11b to changeover the switch 12 to the side $b$, so that circuit operation now changes from speed control to position control. The position deviation signal generating circuit 11a produces first the initially set voltage ISV ($=V_i$) at the same time that the speed zero signal VZR is produced. In response to this signal the spindle begins to rotate again so that the signal AV indicative of the actual speed of the spindle rises to assume the value $V_i$. As the magnetic body 10a continues to rotate and reaches the predetermined rotational position for the first time (time $t_2$), the rotational position deviation signal generating circuit 11a begins generating the coarse position deviation signal CPD. As the spindle continues to rotate and the magnetic body 10a approaches the area in the environs of the predetermined rotational position (time $t_3$), the position deviation signal generating circuit 11a produces the bias signal BIS. Then, when the magnetic body 10a arrives at the abovementioned area (time $t_4$), the fine position deviation signal $DV_2$ starts being generated. When the signal $DV_2$ has decreased to zero, namely when the central portion of the magnetic body (the specified point on the spindle) is directly confronting the central portion of the saturable reactor $SAR_2$, the spindle stops rotating. This completes positioning control of the spindle.

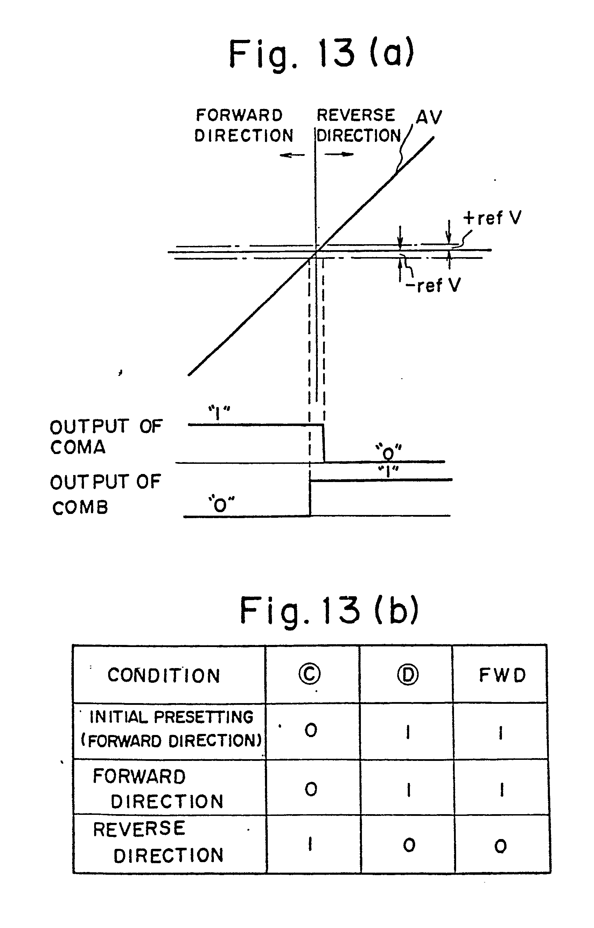

Reference will now be had to Figures 11A and 11B for a fuller understanding of the principal portions of the rotational position deviation signal generating circuit 11a, and to Figure 13 for a description of a DC voltage generating circuit which generates the voltages $+V_i$, $-V_i$ as the signal ISV in accordance with the direction of spindle rotation. Portions in Figures 11A and 11B identical with those of Figure 5 are denoted by like reference characters and are not described again in order to avoid prolixity.

The DC voltage generating circuit, denoted at numeral 100 in Figure 11A, generates a DC voltage RDV whose polarity depends upon the direction of spindle rotation. An operational amplifier AMP amplifies the output AV of the tachometer 5, the output AV representing the actual speed of the spindle. The amplified signal, namely a voltage AV' indicative of actual spindle speed, is applied to comparators COMA, COMB. The comparator COMA compares the amplitude of the voltage AV' with a reference voltage +refv (+75mV), and delivers a signal at logical "0" when AV'>+refv, and at logical "1" when AV'≤+refv. The comparator COMB compares the amplitude of the voltage AV' with a reference voltage −refv (−75mV), and delivers a signal at logical "1" when AV'>−refv, and at logical "0" when AV'≤−refv. This is shown in Figure 13A. The voltage level of logical "0" is higher than +4.5 volts, and the voltage level of logical "1" is lower than 0 volts. In accordance with the foregoing, the outputs of comparators COMA, COMB are "1" and "0", respectively, when the spindle is rotating in the forward direction, and "0" and "1", respectively, when the spindle is rotating in the reverse direction.

Setting means PDS such as a switch is provided to preset the direction from which the spindle will be stopped at the predetermined rotational position. A connection between the points a, c and between the points b, d will allow the spindle to be stopped at the predetermined position when it is rotating in the forward direction, whereas a connection between the points b, c and between the points a, d will allow it to be stopped at the predetermined position when rotating in the reverse direction. Designated at $ND_1$ and $ND_2$ are NAND gates which deliver their outputs to a latch circuit LTC. The latch circuit LTC produces a rotational direction signal FWD which is sent to an analog circuit PNDG for producing a DC voltage RDV whose polarity depends upon the logical value of the signal FWD.

If the outputs of the NAND gates $ND_1$, $ND_2$ are denoted by C and D, respectively, and if the preset rotational direction is the forward direction, then C, D and the signal FWD will be related in the manner shown in Figure 13B when the spindle is rotating in the forward direction and when it is rotating in the reverse direction.

When the rotational direction signal FWD is logical "0" (spindle is rotating in the reverse direction), a PNP transistor TR is rendered conductive so that the analog circuit PNDG delivers a +7.5 volt DC voltage RDV. When FWD is a "1" (spindle is rotating in the forward direction), on the other hand, transistor TR is cut off so that the analog circuit PNDG delivers a −7.5 volt DC voltage RDV.

A circuit 101 is provided to form the initially set voltage ISV and the bias voltage BIS, to integrate the actual speed of the spindle (the AV signal voltage), and to subtract the output voltage resulting from the integration operation (the actual rotational position of the spindle) from the initially set voltage ISV. Specifically, the DC voltage RDV obtained from the DC voltage generating circuit 100 is the −7.5 volt signal if the spindle is at rest or if it is rotating in the forward direction, or the +7.5 volt signal if the spindle is rotating in the reverse direction. The DC voltage RDV charges a capacitor C through an amplifier $AMP_1$ and a switch $S_9$, the voltage charged in the capacitor C becoming the value $-V_i$ or $+V_i$ of the initially set voltage ISV. If the voltage of the actual speed signal AV is applied to the circuit 101 through either switch $S_8$ or $S_7$ after the switch $S_9$ has been opened, the capacitor C charges or discharges at the time constant RC in accordance with the direction of spindle rotation, and the coarse position deviation signal CPD, obtained due to the subtraction of the voltage, resulting from the integration of the actual speed AV, from the initially set voltage ISV, appears at the output of the amplifier $AMP_2$. The amplifier $AMP_2$, resistor R and capacitor C form an integration circuit. If the switches $S_9$, $S_{10}$ are closed after the voltage of the coarse position deviation signal CPD reaches a specified value, the circuit 101 acts as an amplifier, and the bias signal BIS at the specified level is obtained at the output of the amplifier $AMP_2$. In other words, in accordance with the particular combination and timing of the opening and closing operation of the switches $S_7$ through $S_{10}$, first the initially set voltage ISV is delivered, then the coarse position deviation signal CPD, and finally the bias signal BIS.

Numerals 102, 103 denote changeover circuits for switching gain in accordance with gear ratio. These circuits are operable to set the gain of the position control loop high when the gears between the DC motor 4 and the spindle 7 are set low (reduction ratio high), and to set the gain low when the gears are set high (reduction ratio low), that is, to set the gain low in comparison with the gain for the high reduction ratio. More specifically, when the reduction ratio is high, switches $S_7$, $S_2$ are closed to raise the gain, and when the reduction ratio is low, switches $S_8$, $S_3$ are closed to lower the gain. This eliminates spindle hunting and overshoot when stopping the spindle at the predetermined rotational position, and permits the spindle stopping operation to be completed in less time regardless of the scale of the reduction ratio.

Denoted at 104 is a well-known absolute value circuit which takes the absolute value of the output from the circuit 101. A comparator 105 detects whether or not the coarse position deviation signal CPD has fallen below a predetermined level, and produces a signal NRPS which indicates that the predetermined portion (the magnetic body 10a) has drawn near the area in the environs of the predetermined rotational stopping position. The signal NRPS closes the switches $S_9$, $S_{10}$.

A gain adjustment circuit 106 adjusts the gain in accordance with the gap between the magnetic body 10a and the sensing portion 10b, and produces the detection voltage $DV_2$ (the fine position deviation voltage) having a prescribed slope. A slicer circuit 107 slices the approach signal ASV at a predetermined level and produces a signal LS which indicates that the magnetic body has reached the area in the environs of the predetermined rotational position. The signal LS opens the switches $S_5$, $S_6$ and closes switch $S_4$. As a result, the fine position deviation signal $DV_2$ is delivered as the deviation signal.

A forward-reverse changeover circuit 108 has its switch $S_5$ closed in a case where the spindle is controlled by rotating it in the forward direction, and its switch $S_6$ closed in a case where the spindle is controlled by rotating it in the reverse direction. An "in-position" signal generating circuit 109, comprising a comparator, monitors the fine position deviation signal $DV_2$ and generates the in-position signal INPOS when the spindle is within range of the predetermined rotational position. Thereafter a signal indicating completion of the orientation operation is sent to the numerical control unit.

Comparators 110, 111 monitor the fine position deviation signal $DV_2$ and produce signals NEG, POS upon detecting whether the spindle is approaching the predetermined rotational position while rotating in the reverse direction (signal NEG at logical "1") or while rotating in the forward direction (signal POS at logical "1"), respectively. One of the switches $S_5$, $S_6$ will be closed and the other will be opened by the signals VZR and LS depending upon which of the signals NEG, POS is a "1". A waveform synthesizing circuit 112 delivers either the fine position deviation signal or the coarse position deviation signal in accordance with the open or closed state of the switch $S_4$, $S_5$ or $S_6$. A speed detection circuit 113 receives the voltage AV indicative of the actual speed of the spindle and generates the zero speed signal VZR when AV falls to zero. An orientation completion signal generating circuit 114 receives the in-position signal INPOS, the zero speed signal VZR and the orientation command signal ORCM, and takes the logical product of these signals, thereby producing the orientation completion signal ORDEN when INPOS, VZR and ORCM are all at logical "1".

In summary, if the orientation command signal ORCM goes to logical "1", at time $t_0$, the command speed voltage CV drops to zero volts, so that the actual speed decreases, with the voltage indicative of the actual speed dropping to zero volts and the zero speed signal VZR going to logical "1". When this occurs the loop changeover switch 12 is switched over to the side $b$, one of the switches $S_2$, $S_3$ is closed in accordance with the low/high setting of the gears, and one of the switches $S_5$, $S_6$ is closed in accordance with the direction, either forward or reverse, of spindle rotation. This forms a position control loop, with the initially set voltage ISV being delivered from the changeover switch 12. It should be noted that the switch $S_9$ is closed, and that switches $S_7$, $S_8$, $S_{10}$ are open. The DC motor 4 shown in Figure 5 begins rotating again so that the spindle is rotated and reaches the predetermined rotational position the first time (i.e., the signal LS is a "1", and the in-position signal INPOS is a "1"). Hence, at time $t_2$, switch $S_9$ is opened and one of the switches $S_7$, $S_8$ is closed in accordance with the low/high setting of the gears. Therefore the coarse position deviation signal CPD is obtained from the changeover switch 12. Thereafter, as the actual speed and the position deviation decrease and the spindle approaches the area in the environs of the predetermined rotational position (time $t_3$), the comparator 105 issues the signal NRPS (logical "1"), whereby the switches $S_9$ and $S_{10}$ are closed. As a result, the bias signal BIS of the prescribed level is delivered from the changeover switch 12. As the spindle continues to rotate at a slower speed and reaches the area NCP in the environs of the predetermined rotational position (time $t_4$), the signal LS goes to the "1" level, switches $S_5$, $S_6$ are opened, and switch $S_4$ is closed. Hence, the fine position deviation signal $DV_2$ is delivered from the changeover switch 12. When the magnetic body 10a (the predetermined point on the spindle) comes within range of the predetermined rotational position, the in-position signal INPOS is generated. This is followed by the actual speed of the spindle falling to zero, whereupon the speed zero signal VZR returns to logical "1". This completes the control operation for stopping the spindle at the predetermined rotational position, the orientation completion signal ORDEN being delivered from the orientation completion signal generating circuit 114.

In the foregoing it was described that the operation for stopping the spindle at the predetermined position is carried out after the actual speed has dropped to zero. However, this can be performed when the actual speed has reached a certain speed other than zero.

In accordance with the present embodiment as described above, a spindle can be stopped at a predetermined rotational position with a high accuracy without relying upon contacting parts such as a mechanical brake. A highly accurate proximity switch is provided and adapted to produce a fine position deviation signal when a specified point on the spindle has reached the vicinity of the predetermined rotational position, whereby an extremely high accuracy on the order to from $\pm 0.03°$ to $\pm 0.05°$ can be obtained, as confirmed by measurements.

Furthermore, since the spindle can be stopped at the predetermined rotational position from both the forward and reverse directions, the control operation requires less time so that machining efficiency is improved. In addition, highly precise machining can be achieved and flawing of the workpiece eliminated during a boring operation since the spindle can be stopped at the predetermined position without requiring a reversal in direction.

Although the invention has been described in its preferred form with a certain degree of particularity, it is obvious that many modifications and variations are possible in the light of the above teachings. It is therefore to be understood that within the scope of the appended claims, the invention may be practiced otherwise than as specifically described.

The described embodiment provides a system for stopping a spindle 7, which is provided in a machine tool, in such a manner that a specified point on the spindle 7 is stopped at a predetermined rotational position. The system includes means for detecting the direction of spindle rotation. When the spindle 7 arrives at a region where it is to be controlled in order to stop at the predetermined rotational position, a position deviation signal RPD is applied as the input signal of a speed control loop for controlling the rotation of the spindle 7. This signal leads the specified point on the spindle 7 to the predetermined rotational position, from the direction in which the spindle 7 is rotating, on the basis of the direction signal from the detecting means. That is, the specified point on the spindle 7 is guided to the predetermined rotational position from a direction which is the same as the direction of rotation.

## Claims

1. A control system for stopping a spindle (7) at a predetermined rotational position, by driving the spindle (7) in such a manner that a positional deviation between the present rotational position of a specified point on the spindle and a predetermined rotational position at which the specified point is to be stopped is reduced to zero, thereby to stop the specified point on the spindle at the predetermined rotational position, the control system comprising:

DC voltage generating means (PNDG) for generating a DC voltage (RDV) having a first level or a second level depending upon a preset direction of spindle rotation;

means for generating a coarse rotational position deviation signal (CPD) with a polarity dependent upon the first or second level DC voltage from said DC voltage generating means (PNDG);

a sensor (10) for producing an output signal of zero volts when the specified point on the spindle (7) arrives at the predetermined rotational position, and for producing a first or second output signal when the specified point on the spindle (7) is in the vicinity of the predetermined rotational position to the left or right thereof, thereby to produce a fine rotational position deviation signal $(DV_2)$ which crosses the zero volt level;

whereby, in use, the coarse rotational position deviation signal (CPD) from said means for generating the same is delivered as the rotational position deviation signal until the specified point on the spindle (7) reaches the vicinity of the predetermined rotational position, and the fine rotational position deviation signal $(DV_2)$ from said sensor (10) is delivered as the rotational position deviation signal after the specified point on the spindle (7) has reached the vicinity of the predetermined rotational position;

the control system being characterised in that the DC voltage generating means (PNDG) operates in dependence upon a detection means for detecting the direction of spindle rotation, comprising a first comparator (COMA) for comparing a voltage (AV') indicative of the actual spindle speed with a positive reference voltage (+refV), and a second comparator (COMB) for comparing said voltage (AV') with a negative reference voltage (−refV), the outputs of the comparators (COMA, COMB) indicating the direction of spindle rotation, whereby the coarse rotational position deviation signal (CPD) can have a polarity such that the spindle is capable of being stopped at the predetermined rotational position in its actual direction of rotation regardless of whether it is in the forward or reverse direction.

2. A control system according to claim 1, which is such that, when it is in use, the spindle which is rotating in either the forward or reverse direction may be stopped once and then made to rotate in the same direction by the rotational position deviation signal, thereby to stop the specified point on the spindle at the predetermined rotational position.

3. A control system according to claim 1 or 2, which is such that, when it is in use, the spindle which is rotating in either the forward or reverse direction, may reach a speed corresponding to an initial value of the rotational deviation signal during the deceleration of the spindle, the spindle may continue to be rotated in the same direction at the same time said speed is reached, by the rotational position deviation signal thereby to stop the specified point on the spindle at the predetermined rotational position.

4. A control system according to any preceding claim, wherein said first and second levels are positive and negative, or vice versa, respectively.

5. A control system according to any preceding claim, wherein said first or second output signal is positive or negative, or vice versa, respectively.

6. A control system according to claim 1, 2 or 3, wherein the detection means comprises an amplifier (AMP) operatively connectable to receive an actual speed signal (AV), for amplifying the actual speed signal (AV) and for generating an amplified actual speed signal (AV'), and

the first comparator (COMA) has a first input operatively connected to said amplifier (AMP) and a second input operatively connected to the positive reference voltage (+refV), for comparing the amplified actual speed signal (AV') with the positive reference voltage (+refV) and for generating a first logical signal when the amplified actual speed signal (AV') is greater than the positive reference voltage (+refV) and for generating a second logical signal when the amplified actual speed signal (AV') is less than or equal to the positive reference voltage (+refV);

the second comparator (COMB) has a first input operatively connected to said amplifier (AMP) and has a second input operatively connected to the negative reference voltage (−refV), for comparing the amplified actual speed signal (AV') with the negative reference voltage (−refV), for generating a third logical signal when the amplified actual speed signal (AV') is greater than the negative reference voltage (−refV) and for generating a fourth logical signal when the amplified actual speed signal (AV') is less than or equal to the negative reference voltage (−refV);

means (PDS) for presetting the direction from which the spindle will be stopped at the predetermined position;

a first NAND gate (ND1) having a first input, operatively connected to said first comparator (COMA), for receiving the first and second logical signals, having a second input operatively connected to said means (PDS) for presetting the direction and having an output;

a second NAND gate (ND2) having a first input, operatively connected to said second comparator (COMB), for receiving the third and fourth logical signals, having a second input operatively connected to said means (PDS) for presetting the direction and having an output; and

a latch circuit (LTC) having a first input operatively connected to the output of said first NAND gate (ND1), having a second input operatively connected to the output of said second NAND gate (ND2) and having an output, the output of the latch circuit (LTC) being connected to said DC voltage generating means (PNDG).

**Patentansprüche**

1. Steuersystem zum Anhalten einer Spindel in einer vorbestimmten Drehposition, indem die Spindel (7) derart angetrieben wird, daß eine Positionsabweichung zwischen der momentanen Drehposition eines bestimmten Punktes der Spindel und einer vorbestimmten Drehposition, an der der vorbestimmte Punkt angehalten werden soll, auf Null verkleinert wird und dadurch der bestimmte Punkt der Spindel an der vorbestimmten Drehposition angehalten wird,

mit einer Gleichspannungsgeneratoreinrichtung (PNDG) zur Erzeugung einer Gleichspannung (RDV), die in Abhängigkeit von einer voreingestellten Drehrichtung der Spindel einen ersten oder einen zweiten Pegel hat,

mit Mittel zur Erzeugung eines Signals (CPD) für die Grobabweichung der Drehposition, dessen Polarität von dem ersten oder dem zweiten Pegel der von der genannten Gleichspannungsgeneratoreinrichtung (PNDG) abgegebenen Gleichspannung abhängig ist,

mit einem Sensor (10) zur Erzeugung eines Ausgangssignals von Null Volt, wenn der bestimmte Punkt des Spindel (7) an der vorbestimmten Drehposition ankommt und zur Erzeugung eines ersten oder eines zweiten Ausgangssignals, wenn der bestimmte Punkt der Spindel (7) sich in der Nähe der vorbestimmten Drehposition rechts oder links von dieser befindet, und damit zur Erzeugung eines Signals (DV$_2$) für die Feinabweichung der Drehposition, das den Null-Volt-Pegel schneidet,

wobei im Betrieb das Signal (CPD) für die Grobabweichung der Drehposition von den genannten Mitteln zu seiner Erzeugung solange als maßgebendes Drehpositions-Abweichungssignal abgegeben wird, bis der bestimmte Punkt der Spindel (7) in die Nähe der vorbestimmten Drehposition gelangt, und der genannte Sensor (10) das Signal (DV$_2$) für die Feinabweichung der Drehposition als das maßgebende Drehpositions-Abweichungssignal liefert, nachdem der bestimmte Punkt der Spindel (7) in die Nähe der vorbestimmten Drehposition gelangt ist, dadurch gekennzeichnet, daß die Gleichspannungsgeneratoreinrichtung (PNDG) in Abhängigkeit von einer Detektoreinrichtung zur Erfassung der Drehrichtung der Spindel arbeitet und aufweist:

einen ersten Komparator (COMA) für den Vergleich einer die momentane Spindelgeschwindigkeit kennzeichnenden Spannung (AV') mit einer positiven Referenzspannung (+refV)

und einen zweiten Komparator (COMB) für den Vergleich der genannten Spannung (A') mit einer negativen Referenzspannung (−refV)

wobei die Ausgangssignale der Komparatoren, (COMA, COMB) die Drehrichtung der Spindel anzeigen,

derart, daß das Signal (CPD) für die Grobabweichung der Drehposition eine solche Polarität haben kann, daß die Spindel in ihrer momentanen Drehrichtung an der vorbestimmten Drehposition angehalten werden kann, unabhängig davon, ob sie sich in Vorwärts- oder in Rückwärtsrichtung dreht.

2. Steuersystem nach Anspruch 1, das derart ausgebildet ist, daß im Betrieb die Spindel, die sich entweder in Vorwärts- oder in Rückwärtsrichtung dreht, einmal angehalten werden kann und dann durch das Signal für die Abweichung der Drehposition in derselben Richtung weitergedreht wird, wodurch der bestimmte Punkt der Spindel an der vorbestimmten Drehposition angehalten wird.

3. Steuersystem nach Anspruch 1 oder 2, das derart ausgebildet ist, daß im Betrieb die Spindel, die sich entweder in Vorwärts- oder in Rückwärtsrichtung dreht, eine Geschwindigkeit erreichen kann, die einem Anfangswert des Signals für die Abweichung der Drehposition während der Verzögerung der Spindel entspricht, und die Spindel durch das Signal für die Abweichung der Drehposition in derselben Richtung weitergedreht werden kann, sofort wenn die genannte Geschwindigkeit erreicht ist, wodurch der bestimmte Punkt der Spindel an der vorbestimmten Drehposition angehalten wird.

4. Steuersystem nach einem der vorhergehenden Ansprüche, bei dem der erste und der zweite Pegel einen positiven bzw. einen negativen Wert haben, oder umgekehrt.

5. Steuersystem nach einem der vorhergehenden Ansprüche, bei dem das erste oder das zweite Ausgangssignal positiv bzw. negativ sind, oder umgekehrt.

6. Steuersystem nach Anspruch 1, 2 oder 3, das derart ausgebildet ist,

daß die Detektoreinrichtung einen Verstärker (AMP) umfaßt, der wirkungsmäßig derart angeschlossen ist, daß er ein Ist-Geschwindigkeitssignal (AV) empfängt, das Ist-Geschwindigkeitssignal (AV) verstärkt, und ein verstärktes Ist-Geschwindigkeitssignal (AV') erzeugt,

daß der erste Komparator (COMA) einen ersten Eingang besitzt, der wirkungsmäßig mit dem genannten Verstärker (AMP) verbunden ist, sowie einen zweiten Eingang, der wirkungsmäßig mit der positiven Referenzspannung (+refV) verbunden ist, um so das verstärkte Ist-Geschwindigkeitssignal (AV') mit der positiven Referenzspannung (+refV) zu vergleichen und ein erstes Logiksignal erzeugt, wenn das verstärkte Ist-Geschwindigkeitssignal (AV') größer ist als die positive Referenzspannung (+refV) und ein zweites Logiksignal erzeugt, wenn das verstärkte Ist-Geschwindigkeitssignal (AV') kleiner als die oder gleich der positiven Referenzspannung (+refV) ist,

daß der zweite Komparator (COMB) einen ersten Eingang besitzt, der wirkungsmäßig mit dem genannten Verstärker (AMP) verbunden ist, sowie einen zweiten Eingang, der wirkungsmäßig mit der negativen Referenzspannung (−refV) verbunden ist, um so das verstärkte Ist-Geschwindigkeitssignal (AV') mit der negativen Referenzspannung (−refV) zu vergleichen und ein drittes Logiksignal erzeugt, wenn das verstärkte Ist-Geschwindigkeitssignal (AV') größer ist als die negative Referenzspannung (−refV), und ein viertes Logiksignal erzeugt, wenn das verstärkte Ist-Geschwindigkeitssignal (AV') kleiner als die oder gleich der negativen Referenzspannung (−refV) ist, und daß ferner vorgesehen sind:

eine Einrichtung (PDS) zur Voreinstellung der Richtung, aus der die Spindel an der vorbestimmten Drehposition angehalten werden soll, ein erstes NAND-Glied (ND1) mit einem ersten Eingang, der wirkungsmäßig mit dem ersten Komparator (COMA) verbunden ist zum Empfang des ersten und des zweiten Logiksignals, mit einem zweiten Eingang, der wirkungsmäßig mit der Einrichtung (PDS) zur Richtungsvoreinstellung verbunden ist, sowie mit einem Ausgang, ein zweites NAND-Glied (ND2) mit einem ersten Eingang, der wirkungsmäßig mit dem zweiten Komparator (COMB) verbunden ist und zum Empfang des dritten und des vierten Logiksignals, mit einem zweiten Eingang, der wirkungsmäßig mit der Einrichtung (PDS) zur Richtungsvoreingstellung verbunden ist, sowie mit einem Ausgang, und

eine Verriegelungsschaltung (LTC) mit einem ersten Eingang, der wirkungsmäßig mit dem Ausgang des ersten NAND-Glieds (ND1) verbunden ist, ferner mit einem zweiten Eingang, der wirkungsmäßig mit dem Ausgang des zweiten NAND-Glieds (ND2) verbunden ist, sowie mit einem Ausgang, der mit der Gleichspannungsgeneratoreinrichtung (PNDG) verbunden ist.

**Revendications**

1. Un système de commande pour arrêter une broche (7) dans une position de rotation prédéterminée, en entraînant la broche (7) de façon à annuler un écart de position entre la position de rotation actuelle d'un point spécifié de la broche et une position de rotation prédéterminée dans laquelle le point spécifié doit être arrêté, de façon à arrêter le point spécifié de la broche dans la position de rotation prédéterminée, ledit système de commande comprenant:

des moyens pour engendrer une tension continue (PNDG) devant engendrer une tension continue (RDV) ayant un premier niveau ou un second niveau selon un sens de rotation de la broche prédéterminé;

des moyens pour engendrer un signal d'écart de position de rotation grossier (CPD) d'une polarité dépendant de la tension continue de premier niveau ou de second niveau provenant des moyens pour engendrer une tension continue (PNDG);

un capteur (10) devant engendrer un signal de sortie de zéro volt lorsque le point spécifié de la broche (7) arrive dans la position de rotation prédéterminée, et devant engendrer un premier ou un second signal de sortie lorsque le point spécifié de la broche (7) est au voisinage de la position de rotation prédéterminée à sa gauche ou à sa droite, de façon à engendrer un signal d'écart de position de rotation fin (DV$_2$) qui franchit le niveau de tension nul;

de telle sorte qu'en cours d'utilisation le signal d'écart de position de rotation grossier (CPD) provenant des moyens pour l'engendrer est délivré en tant que signal d'écart de position de rotation, jusqu'à ce que le point spécifié de la broche (7) parvienne au voisinage de la position de rotation prédéterminée, et que le signal d'écart de position de rotation fin (DV$_2$) provenant dudit capteur (10) est délivré en tant que signal d'écart de position de rotation après que le point spécifié de la broche (7) soit parvenu au voisinage de la position de rotation prédéterminée, ledit système de commande étant caractérisé en ce que les moyens pour engendrer la tension continue (PNDG) agissent en fonction d'un ensemble de détection devant détecter le sens de rotation de la broche, comprenant un premier comparateur (COMA) devant comparer une tension (AV') représentative de la vitesse effective de la broche à une tension de référence positive (+refV), et un second comparateur (COMB) devant comparer ladite tension (AV') à une tension de référence négative (−refV), les sorties des comparateurs (COMA, COMB) indiquant le sens de rotation de la broche, de telle sorte que le signal d'écart de position de rotation grossier (CPD) peut avoir une polarité telle que la broche peut être stoppée dans la position de rotation prédéterminée dans son sens de rotation effectif, indépendamment du fait que c'est le sens direct ou le sens inverse.

2. Un système de commande selon la revendication 1, qui est tel que, pendant son utilisation, la broche qui tourne dans le sens direct ou le sens inverse peut être arrêtée une fois, puis être remise en rotation dans le même sens par le signal d'écart de position de rotation, de façon à arrêter le point spécifié de la broche dans la position de rotation prédéterminée.

3. Un système de commande selon la revendication 1 ou 2, qui est tel que, pendant son utilisation, la broche qui tourne dans le sens direct ou inverse peut atteindre une vitesse correspondant à une valeur initiale du signal d'écart de rotation pendant la décélération de la broche, la broche peut continuer à tourner dans le même sens au moment où ladite vitesse est atteinte sous l'action du signal d'écart de position de rotation, de façon à arrêter le point spécifié de la broche dans la position de rotation prédéterminée.

4. Un système de commande selon l'une quelconque des revendications précédentes, dans lequel le premier niveau et le second niveau sont respectivement positif et négatif, ou vice-versa.

5. Un système de commande selon l'une quelconque des revendications précédentes, dans lequel le premier signal de sortie et le second signal de sortie sont respectivement positif ou négatif, ou vice-versa.

6. Un système de commande selon la revendication 1, 2 ou 3, dans lequel l'ensemble de détection comprend un amplificateur (AMP) pouvant être connecté de façon à recevoir un signal de vitesse effective (AV), pour amplifier le signal de vitesse effective (AV) et pour engendrer un signal de vitesse effectif amplifié (AV'), et

le premier comparateur (COMA) comporte une première entrée reliée audit amplificateur (AMP) et une seconde entrée reliée à la tension de référence positive (+refV), pour comparer le signal de vitesse effective amplifié (AV') à la tension de référence positive (+refV) et pour engendrer un premier signal logique lorsque le signal de vitesse effective amplifié (AV') est supérieur à la tension de référence positive (+refV) et pour engendrer un second signal logique lorsque le signal de vitesse effective amplifié (AV') est inférieur ou égal à la tension de référence positive (+refV);

le second comparateur (COMB) comporte une première entrée reliée audit amplificateur (AMP) et comporte une seconde entrée reliée à la tension de référence négative (−refV), pour comparer le signal de vitesse effective amplifié (AV') à la tension de référence négative (−refV), pour engendrer un troisième signal logique lorsque le signal de vitesse effective amplifié (AV') est supérieur à la tension de référence négative (−refV) et pour engendrer un quatrième signal logique, lorsque le signal de vitesse effective amplifié (AV') est inférieur ou égal à la tension de référence négative (−refV);

des moyens (PDS) pour prédéterminer le sens à partir duquel la broche sera arrêtée dans la position prédéterminée;

une première porte NON-ET (ND1) comportant une première entrée reliée au premier comparateur (COMA) pour recevoir le premier signal logique et le second signal logique, comportant une seconde entrée reliée auxdits moyens (PDS) pour prédéterminer le sens et comportant une sortie;

une seconde porte NON-ET (ND2) comportant une première entrée, reliée audit second comparateur (COMB), pour recevoir le troisième signal logique et le quatrième signal logique, comportant une seconde entrée reliée auxdits moyens (PDS) pour prédéterminer le sens et comportant une sortie; et

un circuit de verrouillage (LTC) comportant une première entrée reliée à la sortie de ladite première porte NON-ET (ND1), comportant une seconde entrée reliée à la sortie de ladite seconde porte NON-ET (ND2) et comportant une sortie, la sortie du circuit de verrouillage (LTC) étant reliée aux moyens pour engendrer une tension continue (PNDG).

# Fig. 1

# Fig. 2

# Fig. 3

# Fig. 4

# Fig. 5

0 032 312

# Fig. 6(a)

# Fig. 6(b)

# Fig. 6(c)

# Fig. 7(a)

# Fig. 7(b)

# Fig. 7(c)

# Fig. 8

# Fig. 9(a)

# Fig. 9(b)

# Fig. 9(c)

# Fig. 9(d)

# Fig. 10 (a)

# Fig. 10(b)

Fig. II(a)

Fig. II(b)

0 032 312

**0 032 312**

# Fig. 12

10

# Fig. 13 (a)

FORWARD DIRECTION ← REVERSE DIRECTION → AV

+ref V

−ref V

OUTPUT OF COMA  "I"  "O" "I"

OUTPUT OF COMB  "O"

# Fig. 13 (b)

| CONDITION | Ⓒ | Ⓓ | FWD |
|---|---|---|---|
| INITIAL PRESETTING (FORWARD DIRECTION) | O | I | I |
| FORWARD DIRECTION | O | I | I |
| REVERSE DIRECTION | I | O | O |